Europäisches Patentamt

European Patent Office

Office européen des brevets

(11) Publication number: **0 191 461**
A2

(12) # EUROPEAN PATENT APPLICATION

(21) Application number: 86101717.6

(22) Date of filing: 11.02.86

(51) Int. Cl.⁴: **B 60 R 1/06**

(30) Priority: 14.02.85 GR 850391
07.10.85 GR 852416

(43) Date of publication of application: 20.08.86
Bulletin 86/34

(84) Designated Contracting States: **AT BE CH DE FR GB IT LI NL SE**

(71) Applicant: Soumenis, John, 85-98 150 Street, Jamaica New York 11435 (US)

(72) Inventor: Soumenis, John, 85-98 150 Street, Jamaica New York 11435 (US)

(74) Representative: Finck, Dieter et al, Patentanwälte v. Füner, Ebbinghaus, Finck Mariahilfplatz 2 & 3, D-8000 München 90 (DE)

(54) Rearview mirror for the attachment to the outside of a vehicle.

(57) The rearview mirror for the attachment to the outside of a vehicle comprises a frame structure (21) enclosing a mirror disk (60) which is adjustable in its position in relation to the frame structure (21) and an enclosure (30), the longitudinal edges (40, 41) of which are substantially parallel to each other. The enclosure (30) extends from the part (24, 25, 26) of the periphery of the frame structure (21) not facing the vehicle over a length sufficient for shielding against rain and other contaminants but scarcely impairing the angle of view to the rear. The contact plane with the side windowpane (59) of the vehicle is defined by at least the upper longitudinal edge (41) of the enclosure (30) and the lateral front edge (27) of the frame structure (21) facing the vehicle. Thus, the frame structure (21) and the enclosure (30) prevent contact of rain or other contaminants with the mirror disk and the part of the windowpane covered by the rearwardly open longitudinal part of the enclosure (30), permitting so an undisturbed view of the scene in the rearview mirror.

– 1 –

SOUMENIS, John                    EPAC-33449.5

February 11, 1986 Fi/ba

Rearview mirror for the attachment to the outside
of a vehicle

The invention relates to a rearview mirror for the
attachment to the outside of a vehicle comprising
a frame structure enclosing a mirror disk which is
adjustable in its position in relation to the frame
structure.

The outdoor rearview mirrors of the prior art comprise
a frame structure which is fixed on the outside of
the vehicle and which encloses an articulation
arrangement for positioning the mirror disk in
relation to the frame by hand or by a remote control.
A rim of short width extends around the frame preventing
contact of the air turbulences and of substantially
vertically falling rain with the mirror disk.

If the wind is blowing rain in the direction to the
mirror disk and if rain drops and mudwater cover the
side window pane of the vehicle, recognizing of the
rear traffic situation by looking into the outdoor
rearview mirror can become very difficult. A good
judgement of the rear traffic situation by looking only
into the indoor rearview mirror is very often insufficient.

It is the object of the invention to provide a rearview mirror as mentioned in the introductory section which allows to keep the mirror disk and that part of the side window pane of the vehicle, through which the driver looks at the outdoor rearview mirror, free of water and other contaminants.

This object is obtained in that an enclosure, the longitudinal edges of which are substantially parallel to each other, extends from the part of the periphery of the frame structure not facing the vehicle over a length sufficient for shielding against rain and other contaminants but scarcely impairing the angle of view to the rear, and in that at least the upper longitudinal edge of the enclosure and the lateral front edge of the frame structure facing the vehicle define the contact plane with the side windowpane of the vehicle.

The hood-like enclosure of the rearview mirror extending from the frame with the mirror disk over a certain distance to the rear with parallel or flaring generatrices and being in contact with the window pane of the vehicle by the front edge of the frame facing the vehicle and by at least the upper longitudinal edge, care is taken for avoiding contact of water and other contaminants with the mirror disk itself and with that part of the side windowpane, through which the driver looks at the mirror. So always a good rearview by means of the outdoor rearview mirror is permitted independent on the weather situation.

If a ventilation of the interior of the enclosure is desired, a gap is provided between the lower longitudinal edge of the enclosure and the contact plane with the window pane defined by the upper longitudinal edge of the enclosure and the front edge or flange of the frame structure facing the vehicle.

If a ventilation of the interior of the enclosure from below is to be prevented, the longitudinal lower edge of the enclosure is provided to be within the contact plane for the windowpane. With such a structure the enclosure is only open to the atmosphere at its rear edge and laterally completely covered by the side windowpane of the vehicle.

The production of the rearview mirror is very simple, as the enclosure can be made from metal sheet or plastics, which can be opaque or translucent, with well-known standard methods.

For obtaining good protection of the mirror disk against wetting by rain or mud the length of the upper flat wall of the enclosure is about 6 to 20 cm with a diameter or main dimension of the circular or rectangular shape of the mirror disk of 6 to 20 cm. Preferred are 12 to 16 cm for length and/or diameter.

The protection against rain and droplets or contaminants carrying air turbulences can be improved, if the rear edge of the enclosure is longer in its upper section than in its lower section. The length of the lower flat wall may be 10 to 20% less than that of the upper flat wall.

A very favourable and easily producible shape of the enclosure comprises a hollow half-cylinder with an upper flat wall and a lower wall at least flat adjacent to the frame structure closed on the front side by the frame structure which adjustably supports the mirror disk.

With such a shape the upper longer rear section of the enclosure preferably extends from the contact plane with the windowpane over an angle of substantially 90°.

Another convenient shape of the enclosure comprises an

upper flat wall and a  lower flat wall parallel to each
other and connected by an outer flat wall. Such a
parallelepipedic shape of the enclosure can easily be
formed by bending a metal sheet. The upper wall of
the structure can be longer than the lower wall, thus,
the rear edge of the connecting outer wall being inclined
downwardly to the mirror disk.

Advantageously a flange is adjustably secured to the
frame structure by means of a rectangularly deflected
supporting leg for alignment with the contact plane
for the windowpane defined by the flange and the upper
edge of the enclosure. With this embodiment a good
contact of the lateral edge of the frame structure with
the windowpane is permitted while the lower longitudinal
edge of the enclosure can be kept in a distance from
the windowpane or can be pivoted into contact with the windowpane.

A very simple fixture of the rearview mirror arrangement
on the windowpane can be obtained by a ledge extending
upright from the upper edge of the enclosure and
provided with holding means for the engagement with
the upper rim part of the windowpane. The upright
extension of the upright contact flange can be twice
the extension of the upper contact flange of the
ledge covering the upper rim part of the windowpane.
3 cm are preferred as upright extension of the upright
contact flange.

The upright contact flange may have a front end that is
smaller than the rear end. So the upper contact flange is
downwardly inclined to the front end in correspondence
with the inclination or curvature of the windowpane.

For adjustment purposes the ledge can comprise a lower
upright contact flange part secured to the enclosure
and an upper upright contact flange part, the two flange

- 5 -

**0 191 461**

parts being fixable to each other by adjusting the upright extension of the ledge.

Another kind of fixture of the rearview mirror to the vehicle comprises support means for connecting the enclosure on its lower section with a solid part of the vehicle but in contact with the windowpane at least on the upper longitudinal edge of the enclosure and the lateral edge of the frame structure facing the vehicle.

Further embodiments of the invention will be explained by means of drawings.

Fig. 1 shows in an explosion view a first embodiment of the rearview mirror,

Fig. 2 shows in cross-section the mirror disk arrangement to be used with the rearview mirror arrangement of Fig. 1,

Fig. 3 shows perspectively the rearview mirror arrangement of Fig. 1 and 2,

Fig. 4 shows a further embodiment of the rearview mirror in an explosion view,

Fig. 5 shows in three perspective views the embodiment of a ledge arrangement,

Fig. 6 and 7 show perspectively other embodiments of the rearview mirror with modifications of the holding means,

Fig. 8 shows in an explosion view an embodiment of the rearview mirror with another modification of the holding means,

Fig. 9 shows a second embodiment of the enclosure of the rearview mirror,

Fig.10 shows the flange part to be used in connection with the embodiment of the enclosure of Fig. 9,

Fig.11 shows schematically a rearview mirror arrangement for the right side of the vehicle,

Fig.12 shows perspectively another embodiment of the ledge of Fig. 4, and

Fig.13 shows a ledge modified in relation to that of Fig. 12.

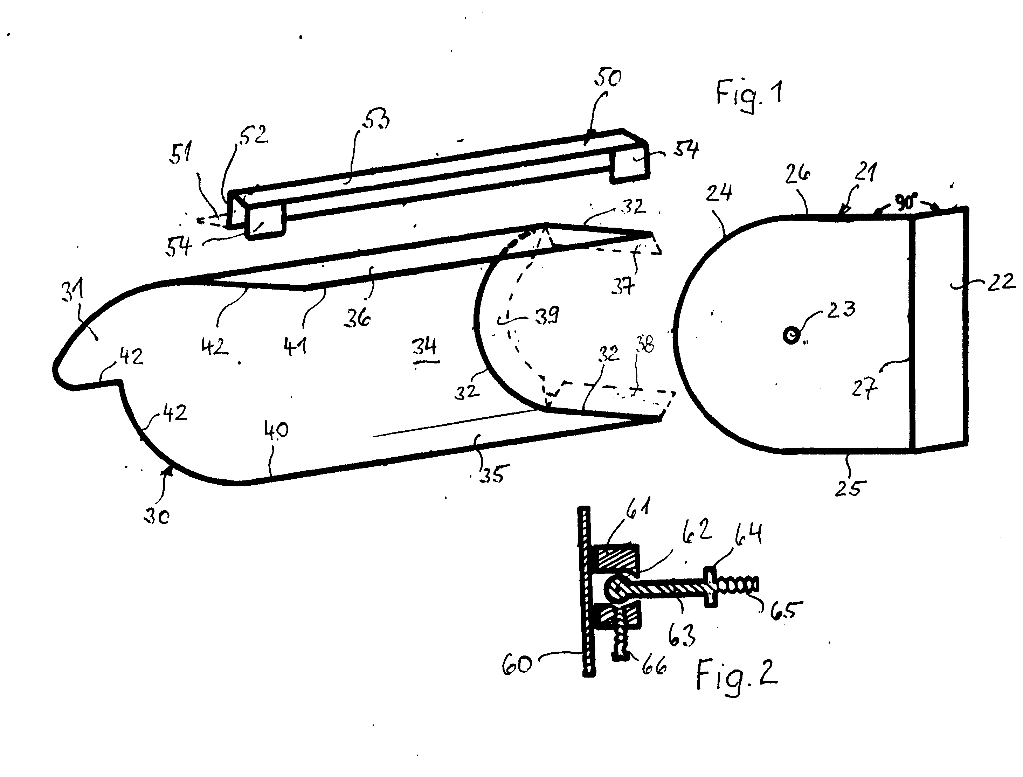

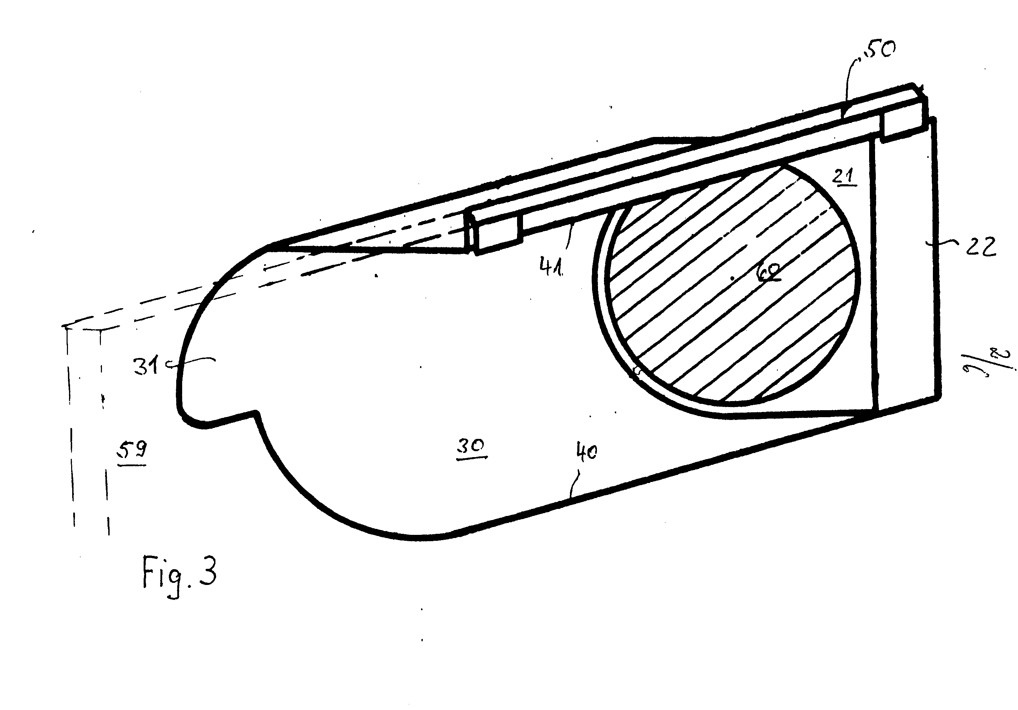

The rearview mirror according to Figures 1 to 3 comprises a frame structure 21 in form of a flat part of metal sheet or plastic with an upper straight edge 26 and a lower straight edge 25 being connected on one side by a half-circle edge 24 and on the other side by a straight lateral edge 27 facing the vehicle. From this lateral edge 27 a flange 22 extends with an angle of 90°, so the flange 22 with the lateral edge 27 forms part of the contact plane with the side windowpane 59 of the vehicle, as shown in Fig. 3.

The frame structure 21 comprises a hole 23, through which the outer thread 65 of a rod 63 is passed, until a stop 64 on the rod 63 contacts the frame structure 21. The rod 63 can be fixed on the frame structure 21 by means of a nut (not shown). The rod 63 ends in a ball 62 which rests in the socket 61 of a universal joint. The socket 61 is connected with the mirror disk 60. The respective position of the mirror disk 60 in relation to the frame structure 21 can be fixed by a set screw 66. Any other adjustment mechanism for fixing and setting the position of the mirror disk 60 in relation to the frame structure 21 can be used.

The frame structure 21 closes the front opening of an enclosure 30. This enclosure comprises an upper flat wall 36 and a lower wall 35 the latter being flat at least adjacent to the frame structure 21. The flat walls 35 and 36 are parallel to each other and connected by a half-cylindrical wall 34. So, the front edge 32 consisting of two parallel straight extensions and a connecting half-circle extension corresponds to the upper straight part 26 and the lower straight part 25 as well as to the half-circle part 24 of the periphery of the frame structure 21. With the embodiment shown in Fig. 1 to 3 the frame structure 21 can be held within the enclosure 30 by means of an upper holding plate 37, a lower holding plate 38 and a half-circular plate 39 bent off the front edge 32 of the enclosure 30.

The extension of the upper flat wall 36 is longer than
the lower flat wall 35. The hollow half-cylinder 34 of
the enclosure 30 extends from the longer upper flat wall
36 over 90° ending in a curved straight edge defining an
upper longer rear section 31 of the enclosure 30. So the
rear edge 42 of the enclosure 30 extends beginning with
the lower longitudinal edge 40 over a quarter-circular
arc ending in a longitudinal straight edge part connected
by a curved end with the upper quarter-circular edge part
of the upper longer rear section 31 of the enclosure 30 and
ending in alignment with the rear edge of the upper longer
flat wall 36. With this rear structure a good release
of air turbulences without influencing the interior of
the enclosure 30 can be obtained.

For the attachment to the upper rim part of the windowpane
59 a ledge 50 is provided comprising a lower flange
parallel to the upper flat wall 36 of the enclosure 30
to be fixed with it, a rectangularly bent-off upright
contact flange 52, an upper contact flange 53 rectangularly
bent from the upright contact flange and downwardly
extending clamping flanges 54 at the outer ends of the
upper contact flange 53. As can be seen from Fig. 3,
the upright contact flange 52  the lower edge of which
corresponds to the upper longitudinal edge 41 of the
enclosure 30 and the downwardly extending flanges 54
include the vertical surfaces of the windowpane 59 while
the upper contact flange 53 rests on the upper small
surface of the windowpane 59.

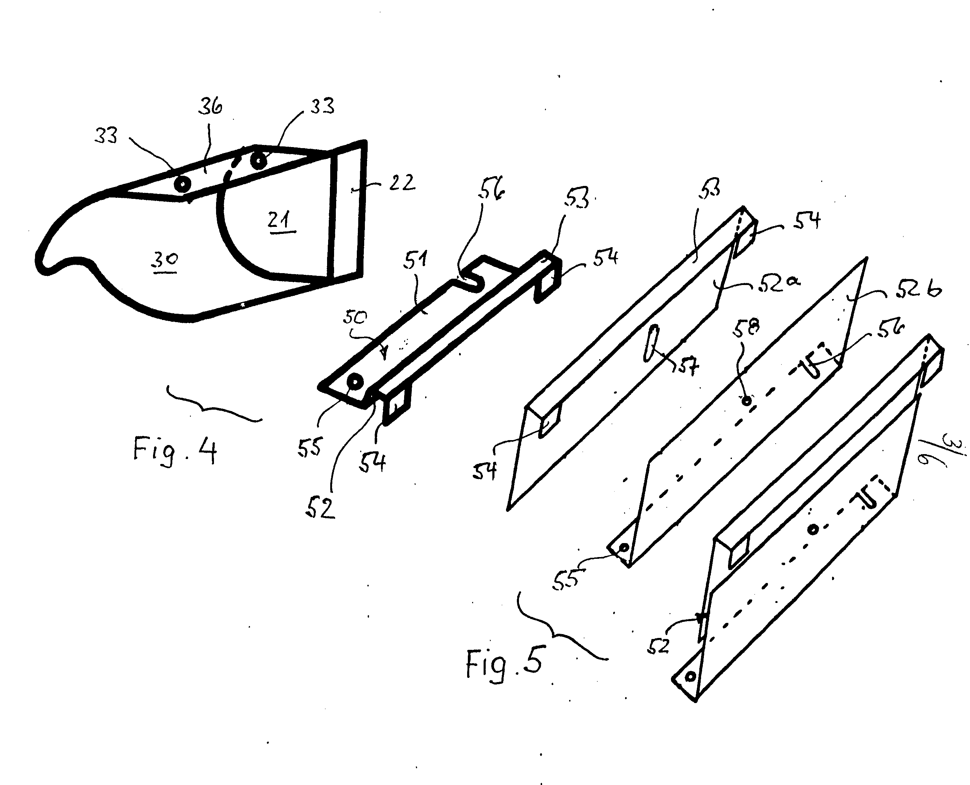

Fig. 4 shows how to adjustably fit the ledge 50 on the
upper flat wall 36 of the enclosure 30. In this upper flat
wall 36 two holes 33 are provided in a longitudinal
distances, to which a hole 50 and a slot 56 in the lower
flange of the ledge 50 are associated, the flange 56
extending into the lower flange 51 from its outer margin By means of screws (not shown) the ledge 50 can be fixed on the upper wall 36, which screws extend through the holes 33 and 55 and 33 and the slot 56, respectively. By means of the slot 56 the adjustment of the ledge 50 in relation to the windowpane (not shown) can be obtained.

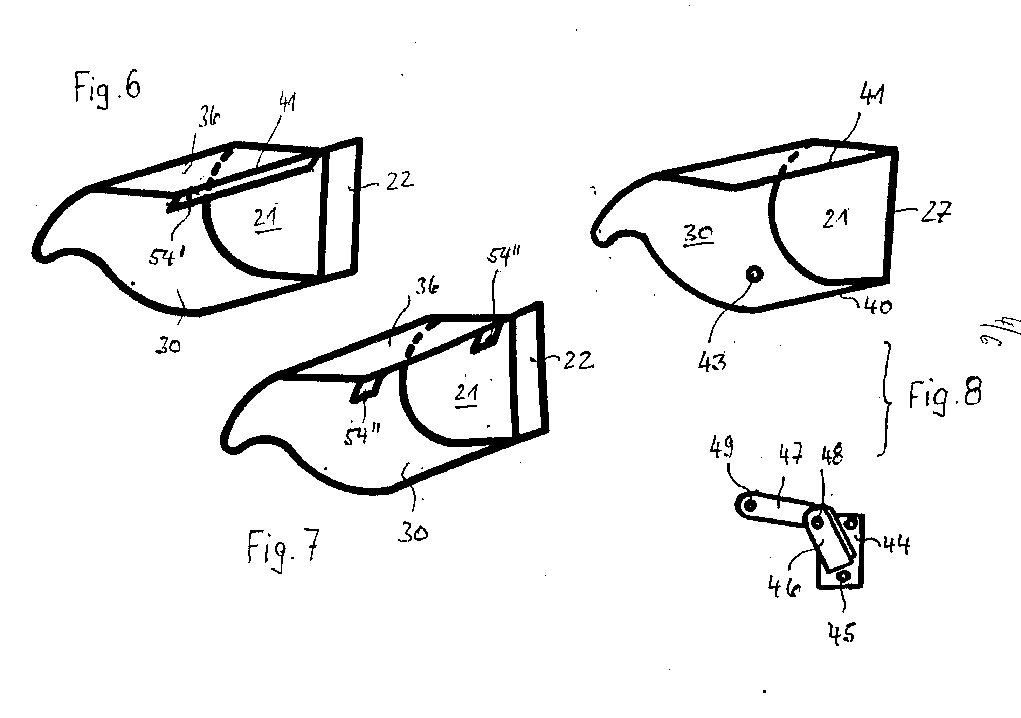

If a vertical adjustment of the ledge 50 should be necessary, the upright contact flange consists of an upper part 52a and a lower part 52b, which are adjustably connectable by a screw (not shown) passed through a bore 58 in the lower part 52b and a vertical slot 57 in the upper part 52a as shown in Fig. 5.

Instead of the ledge 50 a clamping flange 54' can be used, as shown in Fig. 6, which extends from the upper longitudinal edge 41 of the enclosure 30 downwardly.

As shown in Fig. 7, the flange 54' of Fig. 6 can be replaced by two longitudinally spaced flange parts 54''.

Fig. 8 shows another embodiment for securing the enclosure 30 to a solid part of the vehicle door. For this securing a base plate 44 is used having two holes 45 for passing screws, which can be fixed on the vehicle. A first arm 46 extends from the base plate 44, to the free end of which a second arm 47 is connected by means of a fixable pivot 48. The free end of the second arm 47 comprises a hole 49 for passing through a screw or rivet (not shown) which is also passed through a hole 43 in the lower part of the enclosure 30. The arrangement of the enclosure 30 of Fig. 8 in relation to the vehicle is such that at least the upper longitudinal edge 41 of the enclosure 30 and the lateral edge 27 of the frame structure 21 are in contact with the windowpane (not shown). Further, the arrangement can be made such that the lower longitudinal edge 40 is also in contact with the windowpane. In other words, the edges 41, 27 and 40 define the contact plane of the enclosure 30 and its frame structure 21 with the windowpane.

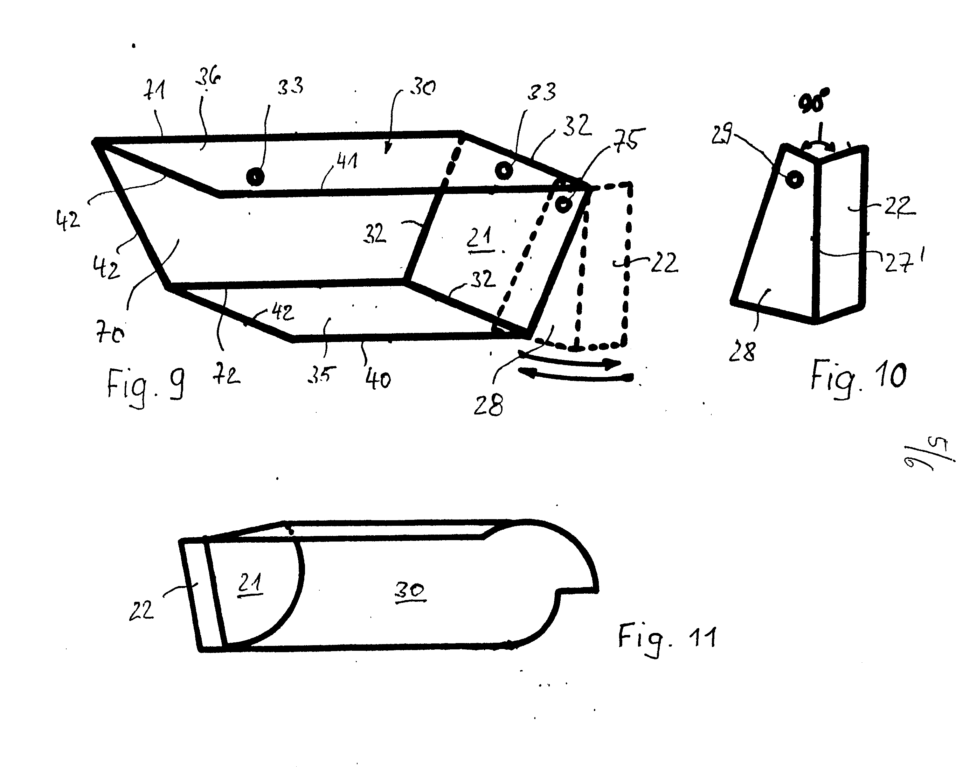

The embodiment of an enclosure shown in Fig. 9 and 10 has an upper longer flat wall 36 and a lower shorter flat wall 35, which are connected along the longitudinal edges 71 and 72, respectively, by an outer flat wall 70 such that the rear edge 42 connecting the edges 71 and 72 is downwardly inclined to the front. For an adjustment of the flange 22 of the frame structure 21 with the intended contact plane with the windowpane, the frame structure 21 comprises two wall parts, the one wall part extending between the upper edges 71 and 41 and the lower edges 72 and 40 of the enclosure 30, while the other part comprises a support leg 28 parallel to the frame structure 21 and fixed thereto by means of a screw (not shown) passed through a hole 75 in the frame structure 21 and a hole 29 in the supporting leg 28 in its upper part, from which the flange 22 extends with an angle of 90°. Thus, the supporting leg 28 with the flange 22 can be pivoted around the holes 75 and 29 in the directions of the two arrows shown in Fig. 9. In the positions of the leg portion 28 and the flange 22 of Fig. 9, the contact plane with the windowpane is defined by the flange 22 and the upper longitudinal edge 41 of the hollow parallelepipedic enclosure 30.

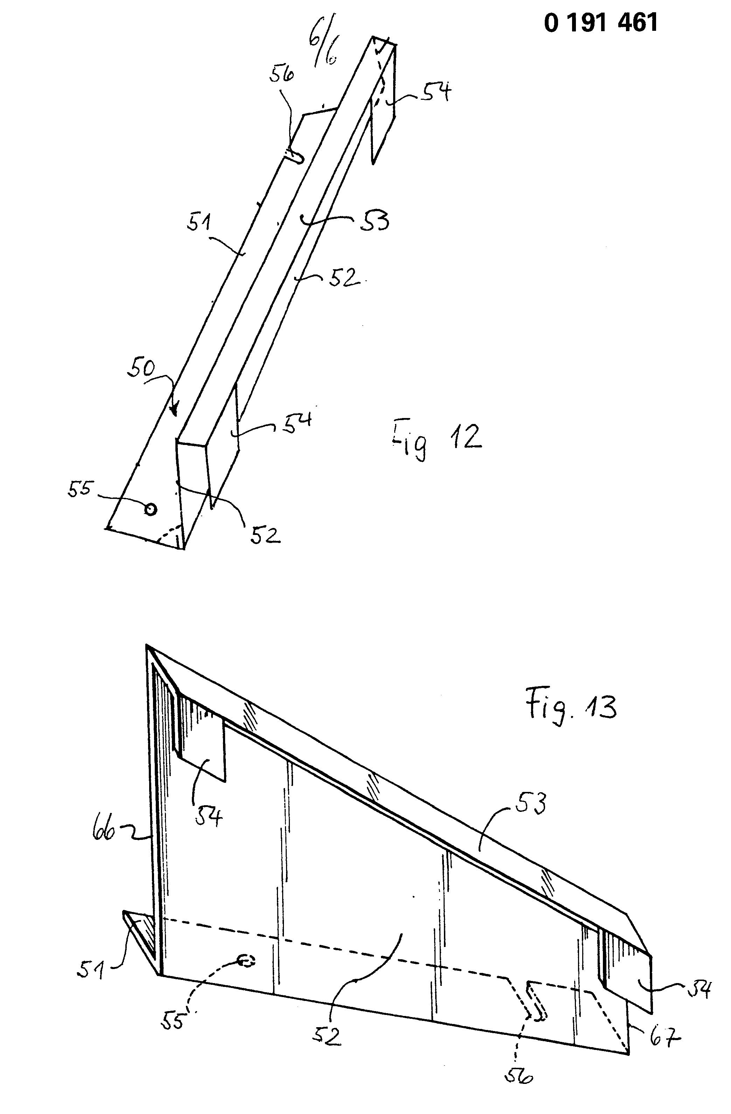

Fig. 11 shows an enclosure 30 with frame structure 21 and flange 22 for a rearview mirror on the right side of the vehicle.

The embodiment of Fig. 12 shows a ledge 50 with an upright contact flange 52 the upward extension of which is greater than the downward extension of the clamping flanges 54 (compare Fig. 4). The upward extension of the flange 52 is preferably approximately twice the width of the upper contact flange 53 and amounts usually to 3 cm.

The embodiment of the ledge 50 of Fig. 13 shows a ledge with a structure as shown in Fig. 12 but having an upright contact flange 52 the front end 67 of which is smaller than its rear end 66 which are parallel to each other and to be mounted vertically. So the upper contact flange is inclined downwardly to the front. The angle of inclination is selected corresponding to the inclination or curvature of the upper rim of the windowpane. The downwardly extending clamping flanges 54 comprise parallel front and rear ends the lower end being parallel to the inclined upper contact flange 53. Thus, the clamping flanges 54 have a parallelogram-shape.

CLAIMS:

1. Rearview mirror for the attachment to the outside of a vehicle comprising a frame structure (21) enclosing a mirror disk (60) which is adjustable in its position in relation to the frame structure (21), characterized in that an enclosure (30), the longitudinal edges (40, 41; 71, 72) of which are substantially parallel to each other, extends from the part (24, 25, 26) of the periphery of the frame structure (21) not facing the vehicle over a length sufficient for shielding against rain and other contaminants but scarcely impairing the angle of view to the rear, and in that at least the upper longitudinal edge (41) of the enclosure (30) and the lateral front edge (27, 27') of the frame structure (21) facing the vehicle define the contact plane with the side windowpane (59) of the vehicle.

2. Rearview mirror according to claim 1, characterized in that the rear edge (42) of the enclosure (30) is longer in its upper section (31; 71, 41) than in its lower section (72, 40).

3. Rearview mirror according to claim 1 or 2, characterized in that the enclosure (30) consists of a hollow half-cylinder (34) with an upper flat wall (36) and a lower wall at least flat adjacent the frame structure (21) closed on the front side by the frame structure (21) which adjustably supports the mirror disk (60).

4. Rearview mirror according to claim 2 or 3, characterized in that the upper longer rear section (31) of the enclosure (30) extends from the upper longitudinal edge (41) of the contact plane with the windowpane (59) over an angle of substantially 90°.

5. Rearview mirror according to claim 1 or 2, characterized in that the enclosure (30) comprises upper flat wall (36) and a lower flat wall (35) parallel to each other and connected by an outer flat wall (70).

6. Rearview mirror according to one of the claims 1 to 5, characterized in that a flange (22) is adjustably secured to the frame structure (21) by means of a rectangularly deflected supporting leg (28) for alignment with the contact plane of the window pane (59) defined by the flange (22) and the upper longitudinal edge (41) of the enclosure (30).

7. Rearview mirror according to one of the claims 1 to 6, characterized in that the longitudinal lower edge (40) of the enclosure (30) is within the contact plane for the windowpane (59).

8. Rearview mirror according to one of the claims 1 to 7, characterized by a ledge (50) extending from the upper edge (41) of the enclosure (30) and provided with holding means (52, 53, 54; 54', 54'') for the engagement with the upper rim part of the windowpane (59).

9. Rearview mirror according to claim 8, characterized in that the ledge (50) comprises a lower upright contact flange part (52b) secured to the enclosure (30) and an upper upright contact flange part (52a), the two flange parts (52b, 52a) being fixable (58, 57) to each other by adjusting the upright extension of the ledge (50).

10. Rearview mirror according to one of the claims 1 to 7, <u>characterized by</u> support means (44 to 49) for connecting the enclosure (30) on its lower section (35) with a solid part of the vehicle but in contact with the windowpane (59) at least on the upper longitudinal edge (41) of the enclosure (30) and the lateral edge of the frame structure (21) facing the vehicle.

Fig. 1

Fig. 2

0 191 461

1/6

Fig.3

31

59

30

40

41

21

60

50

22

0 191 461

Fig. 4

Fig. 5

33  36  33
22
21
30

56  53  53
51  54  54
50  52a  52b
57  58  56
55
54
52

0 191 461

3/6

Fig. 6

36    41

54'    21    22

30

Fig. 7

36    54"

54"    21    22

30

41

30    21    27

43    40

Fig. 8

49    47    48

46    44

45

EPAC-33449.5

0 191 461

Fig. 9

Fig. 10

Fig. 11

EPAC-33449.5

5/6

0 191 461

6/6

Fig 12

Fig. 13